(19) Europäisches Patentamt
European Patent Office
Office européen des brevets

(11) **EP 3 832 598 A1**

(12) **EUROPEAN PATENT APPLICATION**

(43) Date of publication:
**09.06.2021  Bulletin 2021/23**

(51) Int Cl.:
*G06T 7/277* (2017.01)     *G01C 21/20* (2006.01)
*G01C 21/30* (2006.01)     *G01C 21/16* (2006.01)
*G01S 5/02* (2010.01)     *G01S 13/02* (2006.01)
*G01S 13/88* (2006.01)

(21) Application number: **19213741.2**

(22) Date of filing: **05.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **Aptiv Technologies Limited
St. Michael (BB)**

(72) Inventors:
• **PISHEHVARI, Ahmad**
  **42103 Wuppertal (DE)**
• **LESSMANN, Stephanie**
  **40699 Erkrath (DE)**

(74) Representative: **Manitz Finsterwald
Patent- und Rechtsanwaltspartnerschaft mbB
Martin-Greif-Strasse 1
80336 München (DE)**

(54) **METHODS AND SYSTEMS FOR DETERMINING AN INITIAL EGO-POSE FOR INITIALIZATION OF SELF-LOCALIZATION**

(57)     A computer implemented method for determining an initial ego-pose for initialization of self-localization comprises the following steps carried out by computer hardware components: providing a plurality of particles in a map; grouping the particles in a plurality of clusters; performing particle filtering individually for each of the clusters; and determining an initial ego-pose based on the particle filtering.

EP 3 832 598 A1

## Description

FIELD

The present disclosure relates to methods and systems for determining an initial ego-pose for initialization of self-localization, for example of a vehicle.

BACKGROUND

Self-localization is the most important part of many autonomous driving applications. There are various methods to solve the ego-localization problem such as using the Global Navigation Satellite Systems (GNSS), dead reckoning, or simultaneous localization and mapping (SLAM) methods.

The self-localization problem may be classified into two main groups of local self-localization and global self-localization.

If the initial ego-pose is unknown, then a global self-localization may be performed. Assuming a known initial ego-pose results in a local self-localization. For example, if GNSS signals are not available, the initial pose must be determined using other means.

Accordingly, there is a need to provide efficient and reliable methods for determining the initial pose of a vehicle, even when GNSS signals are not available.

SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure is directed at a computer implemented method for determining an initial ego-pose for initialization of self-localization, the method comprising the following steps performed (in other words: carried out) by computer hardware components: providing a plurality of particles in a map; grouping the particles in a plurality of clusters; performing particle filtering individually for each of the clusters; and determining an initial ego-pose based on the particle filtering.

In other words, cluster parallel filtering may be performed to keep all clusters tracked and processed as separate filters in parallel until the filter convergence (which is recognized by monitoring the filter parameters). This may avoid filter divergence, and may obviate the need for particle injection.

According to another aspect, the particle filtering is performed individually for each of the clusters in parallel. Performing the particle filtering in parallel may be understood as using at least some computational resources at the same time for particle filtering of two or more of the clusters.

According to another aspect, the plurality of particles are provided based on a random distribution over the map and/or based on an estimate of the ego-pose.

If no information is available for the ego-pose, then a random distribution over the map may be provided. Otherwise, a distribution which is more focused on the estimate of the ego-pose may be used.

According to another aspect, performing the particle filtering comprises: sample distribution, prediction, updating, and re-sampling. By predicting the particles, a location of each of the particles in a next time step may be determined. By updating, the samples are weighted considering the map and sensor observation. By re-sampling, the locations of the particles may be represented by a suitable set of samples (in other words: particles) for the subsequent time step.

According to another aspect, the particles are grouped into the plurality of clusters based on a numbers of particles in a potential cluster. For example, clustering may be carried out repeatedly (or iteratively), until the number of particles in the potential clusters fulfils a predetermined criterion, for example, until the number of particles in each of the clusters is above a pre-determined threshold (in other words: until each cluster includes at least a pre-determined number of particles).

According to another aspect, the particles are grouped into the plurality of clusters based on a numbers of potential clusters. For example, clustering may be carried out repeatedly (or iteratively), until the number of clusters fulfils a pre-determined criterion, for example, until the number of clusters is below a pre-determined threshold.

According to another aspect, the computer implemented method further comprises the following step carried out by the computer hardware components: exhausting a cluster if it is outside a region of interest. For example, if the cluster is outside the map, then it may be exhausted (in other words: the cluster and the particles of the cluster may be deleted or removed from consideration).

According to another aspect, the computer implemented method further comprises the following step carried out by the computer hardware components: exhausting a particle of a cluster if the particle is outside a region of interest. For example, if particles of the cluster are outside the map, then these particles may be exhausted (in other words: deleted or removed from consideration).

According to another aspect, the computer implemented method further comprises the following steps carried out by the computer hardware components: receiving electromagnetic radiation emitted from at least one emitter of a sensor system of a vehicle and reflected in a vicinity of the vehicle towards the sensor system. For example, the sensor system may include a radar sensor and/or a LiDAR sensor and/or an infrared sensor.

According to another aspect, the particle filtering is performed based on the received electromagnetic radiation and based on the map. Illustratively, , by performing the weighting (updating) process according to a comparison of the information, for example distance and/or angle information, obtained based on the electromagnetic radiation, with the information on static objects represented in the map, estimates of the location may be obtained.

According to another aspect, the initial ego-position is determined based on at least one of a pre-determined number threshold for the number of clusters or a pre-determined size threshold for the respective spatial sizes of the clusters. For example, if only one cluster remains, then this cluster may be considered to represent the initial ego-position.

According to another aspect, the initial ego-position is determined based on entropy based monitoring based on a binary grid.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processing unit, at least one memory unit and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at vehicle equipped with a sensor system adapted to receive electromagnetic radiation emitted from at least one emitter of a sensor system and reflected in a vicinity of the vehicle towards the sensor system, and a computer system, for example a computer system as described above, for determining an initial ego-pose for initialization of self-localization of the vehicle.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

method described herein.

DRAWINGS

Exemplary embodiments and functions of the present disclosure are described herein in conjunction with the following drawings, showing schematically:

Fig. 1     an illustration of particle clustering of a map with particles according to various embodiments;

Fig. 2     an illustration of cluster parallel filtering according to various embodiments;

Fig. 3     an illustration of a scenario of ego-pose initialization with particle filtering according to various embodiments in a parking lot with three generated clusters as an example of the parallel filtering according to various embodiments;

Fig. 4     an illustration of monitoring of three generated clusters based on their effective sample size and entropy information after a clustering process according to various embodiments;

Fig. 5     a flow diagram illustrating a method for determining an initial ego-pose for initialization of self-localization according to various embodiments.

DETAILED DESCRIPTION

According to various embodiments, a map may be used for finding the initial pose of the vehicle, i.e., where the vehicle starts to move. For example, the map may be an OpenStreetMap and/or occupancy grid map. The map may include information on static objects, such as walls, pillars, tress, houses or guard rails. Information indicated by the map may be provided on a discrete grid (so that the map may also be referred to as a grid). Particle filtering may be used for finding the initial pose of the vehicle. A map may be input into the particle filter and then the filter may be initialized. The initialization process may be the distribution of the samples (in other words: particles) in the entire region, where the initial ego-pose is unknown. While theoretically the region could be the whole world, usually some coarse information about the initial ego-pose is available, such as "The vehicle is in a parking garage" or "The vehicle is in this area of the city".

Based on this initial coarse information, samples may be distributed within the map of the area and particle filtering may be performed. Particle filtering may have the following steps: filter initialization (in other words: sample distribution), prediction, updating (in other words: weighting), and re-sampling, like will be described in more detail below.

After initialization, the movement of each particle may be predicted based on the vehicle movement information (for example yaw rate and velocity) and a vehicle model. Based on the updated sample poses, each sample may be weighted based on a comparison between the sensor observation (for example radar, camera, or LiDAR) and the map. Due to this weighting, some samples may get a higher weight than the other samples. The domination of the particles with a higher weight to the other samples may lead to a problem, called "degeneracy". To avoid this problem, re-sampling may be performed which focuses the samples to the regions where the sample weights are higher, since the vehicle is more likely to be located in these regions. After some sample times, the particles are more concentrated in one region and the initial ego-pose is considered as found. The size of the recognized area can be defined by the user, for example the user can define an area of 5 m$^2$ for the initialization success. If all particles are concentrated in an area smaller or equal to that value, the filtering process for the initialization may be considered done.

However, some factors may lead to filtering problems or even filter divergence, which means that the filter converges to a wrong initial pose. Some common problems, which may be faced during the filtering process are impoverishment (which refers to a fast and high concentration of the particles in a small region), degeneracy (which refers to a situation where the weights of many samples are close to zero, so that there is a large difference between sample weights), or filter divergence (which refers to a complete divergence of the filter, so that initialization fails).

The source of particle divergence may be sparse and noisy measurements, for example in a case of using radars, when the observations are sparse.

For avoiding the particle filter divergence, strategies such as particle injection based on different sensor system may be used, for example based on radars, LiDAR, camera or a combination of these sensors. If the divergence is recognized, new particles are injected into the filter in the entire initialization area. However, this particle injection into the filter in the entire initialization area is considered a filter reset, which should be avoided.

According to various embodiments, clustering of particles may be applied, which may overcome the divergence problem of the particle filtering in case of noisy and sparse measurements or inaccurate map. A binary grid may be provided over the entire region with a pre-determined resolution. A binary clustering may be performed for all particles in each sample time. Clusters which have a number of samples over a pre-determined threshold may be considered. The number of clusters may also have a threshold and if the number of clusters reaches the threshold, then the clusters may be tracked in parallel which is explained in more detail below. All clusters may represent the map regions where the probability of the ego-pose is high according to the measurements until the clustering time.

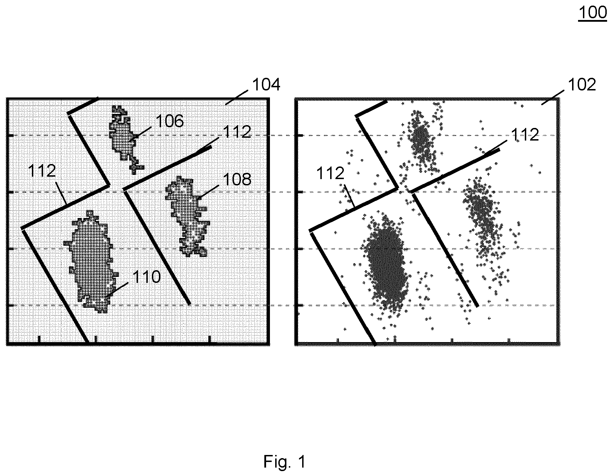

Fig. 1 shows an illustration 100 of particle clustering of a map 102 with particles according to various embodiments, and the generated clusters 106, 108, 110 for an example scene with several obstacles 112 (for example walls), so as to provide a clustered map 104.

The particles of the map 102 may be clustered with a binary grid (for example with a resolution of 10 cm in x direction and 10 cm in y direction). The three clusters 106, 108, 110 may be generated after the clustering process. Each cluster is considered and processed as a separate particle filter. Only particles in the clusters are considered, and particles which are not included in any cluster are not taken into consideration for particle filtering.

Each cluster may be continuously monitored by the effective sample size and entropy. If the effective sample size and entropy of one cluster meet certain conditions, considering all clusters, then the particle filter is initialized and other clusters are eliminated.

According to various embodiments, based on the clusters, a cluster parallel filtering (for parallel processing of all clusters) may be provided. Each cluster may be processed separately, after the clusters reach a certain number equal or smaller than a threshold.

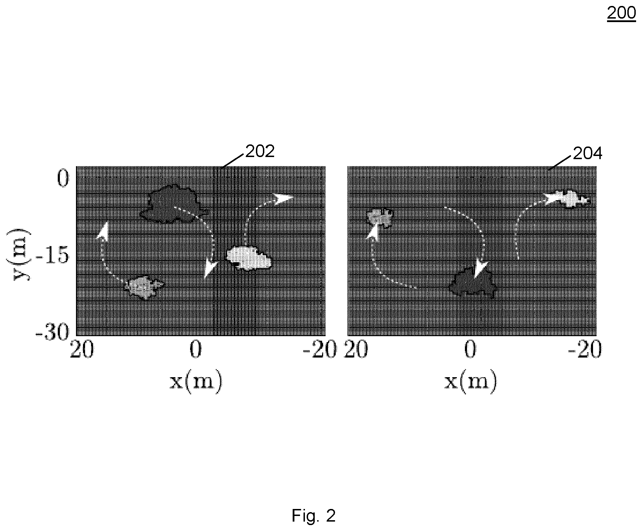

Fig. 2 shows an illustration 200 of cluster parallel filtering according to various embodiments. The clusters of the left map 202 (at clustering time) may be processed independently and updated, so as to arrive at the clusters of the right map 204 (after updating clusters with motion model). The distribution of each particle cluster may change with time as a separate filter.

Each of the different clusters of the left map 202 may be processed within the tracked trajectory independently. The cluster particles may be tracked using the motion parameters and the vehicle model. The cluster size and the number of particles may be changed, depending on the re-sampling method. The clusters after processing within some sample times are illustrated in the right map 204.

According to various embodiments, all of the filtering processes (prediction, update, re-sampling) may be performed for each cluster independently from the other clusters. Clusters which move outside of the valid region may not be considered anymore and may be extinguished. The valid clusters (in valid area in which the belief is searched) may be monitored by their effective sample size and entropy in each sample time. The filter may be converged if the conditions

$$ESS(C_i) > k_1 SS(C_i)$$

$$ESS(C_i) > k_2 \, ESS(C_j)$$

are fulfilled for the cluster i, wherein SS may be the sample size, ESS may be the effective sample size, $k_1$ and $k_2$ may be thresholds, $1 < i, j < N_{clusters}$, and $N_{clusters}$ may be the number of clusters.

With the cluster parallel filtering method according to various embodiments, a divergence may be avoided in a computational efficient way. No sample are added to the filter, but the strategy may be solely to keep the samples which represent the region with high probability for the belief of the ego-pose. As described above, the clusters may not be processed as one particle filter, but each cluster may be processed separately (and, for example, in parallel). In such a way, no additional computation time may be added to the filtering process, and a filter reset may not be necessary.

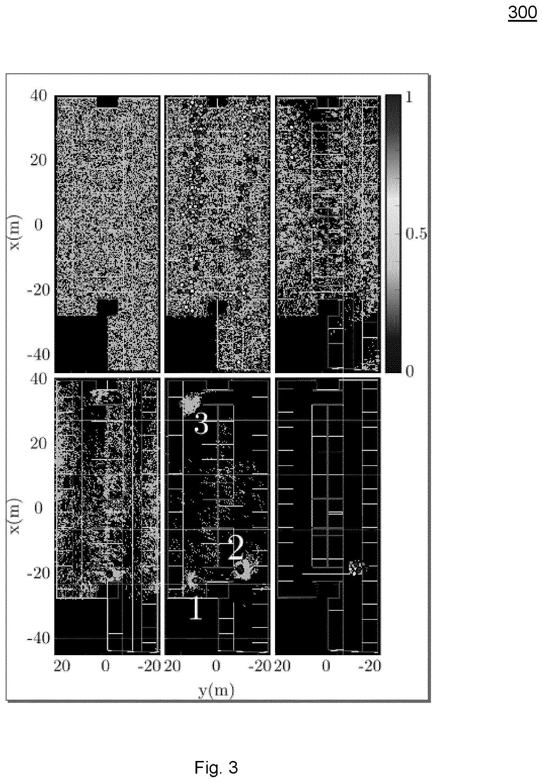

Fig. 3 shows an illustration 300 of a scenario of ego-pose initialization with particle filtering according to various embodiments in a parking lot with three generated clusters (denoted as "1", "2", and "3") as an example of the parallel filtering according to various embodiments.

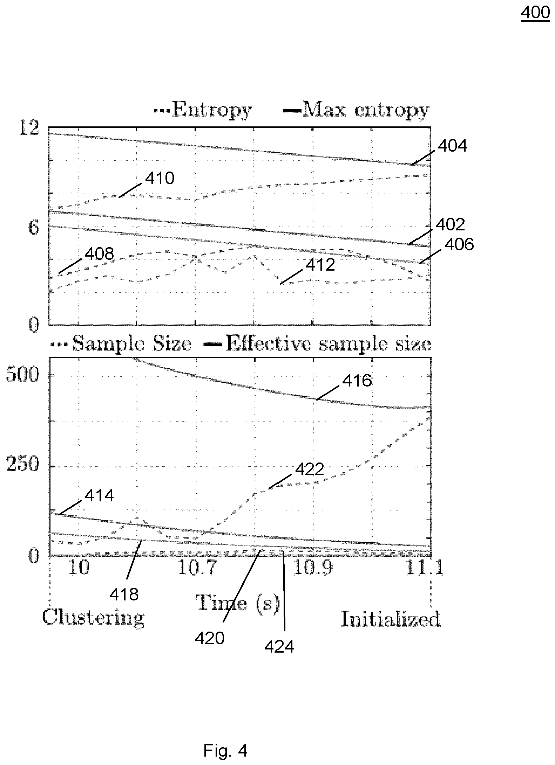

Fig. 4 shows an illustration 400 of monitoring of three generated clusters based on their effective sample size and entropy information after a clustering process according to various embodiments. If one cluster meets the pre-defined convergence condition, the filter is initialized successfully. As an example, Fig. 4 illustrates the result of the cluster parallel filtering for the scenario of Fig. 3. The top portion of Fig. 4 shows the maximum entropies as solid lines and the entropies as dashed lines. Solid line 402 represents the maximum entropy of the first cluster, solid line 404 represents the maximum entropy of the second cluster, solid line 406 represents the maximum entropy of the third cluster, dashed line 408 represents the entropy of the first cluster, dashed line 410 represents the entropy of the second cluster, and dashed line 412 represents the entropy of the third cluster.

The bottom portion of Fig. 4 shows the effective sample sizes as solid lines and the sample size as dashed lines. Solid line 414 represents the effective sample size of the first cluster, solid line 416 represents the effective sample size of the second cluster, solid line 418 represents the effective sample size of the third cluster, dashed line 420 represents the sample size of the first cluster, dashed line 422 represents the sample size of the second cluster, and dashed line 424 represents the sample size of the third cluster.

The symmetrical form of the parking lot and accordingly the ambiguity of the observations in opposite side of the map presents a major challenge for the particle filtering. The symmetry leads to survival of the clusters within the re-sampling process which is also observable in Fig. 4. The effective sample size of the first cluster reduces continuously with time as it moves towards the map boundaries from the time 11 s. Due to the affinity of the observations on two corners of the parking lot for the second cluster and the third cluster, their samples obtain almost alike weights within the time between 10.7 s and 10.8 s. With more dense measurements from the lower right corner of the map, an effective samples size increment is observed for the second cluster.

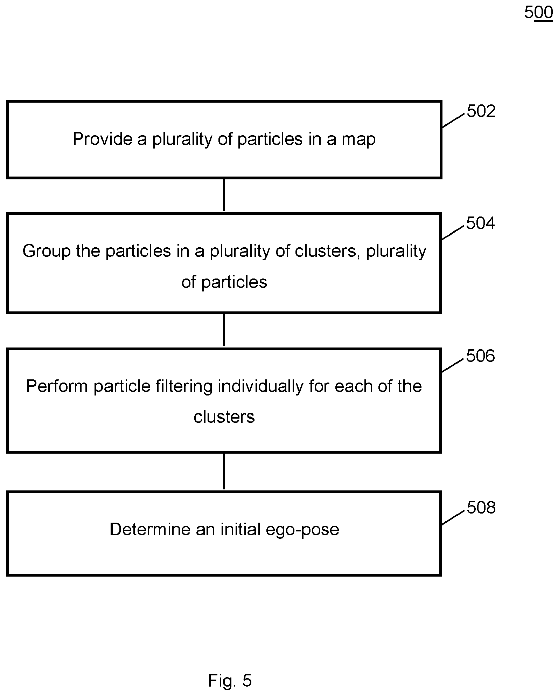

Fig. 5 shows a flow diagram 500 illustrating a method for determining an initial ego-pose for initialization of self-localization according to various embodiments. At 502, a plurality of particles may be provided in a map. At 504, the particles may be grouped in a plurality of clusters. At 506, particle filtering may be performed individually for each of the clusters. At 508, an initial ego-pose may be determined based on the particle filtering.

According to various embodiments, the particle filtering may be performed individually for each of the clusters in parallel.

According to various embodiments, the plurality of particles may be provided based on at least one of a random distribution over the map, or an estimate of the ego-pose.

According to various embodiments, performing the particle filtering may include: sample distribution, prediction, updating, and re-sampling.

According to various embodiments, the particles may be grouped into the plurality of clusters based on at least one of a numbers of particles in a potential cluster, or a numbers of potential clusters.

According to various embodiments, a cluster may be exhausted if it is outside a region of interest. According to various embodiments, a particle of a cluster may be exhausted if the particle is outside a region of interest.

According to various embodiments, electromagnetic radiation emitted from at least one emitter of a sensor system of a vehicle and reflected in a vicinity of the vehicle towards the sensor system may be received.

According to various embodiments, the particle filtering may be performed based on the received electromagnetic radiation and based on the map.

According to various embodiments, the initial ego-position may be determined based on at least one of a pre-determined number threshold for the number of clusters or a pre-determined size threshold for the respective spatial sizes of the clusters.

According to various embodiments, the initial ego-position may be determined based on entropy based monitoring based on a binary grid.

Each of the steps 502, 504, 506, 508 and the further steps described above may be performed by computer hardware components.

It will be understood that the individual (or parallel) filtering according to various embodiments is not to be confused with parallel filtering implementation in the literature, wherein the particle filter is parallelized in the software to use the complete capacity of the processor or to map the particle filter on a graphic processing unit (GPU), and which is an implementation method to speed up the filtering process by parallel implementation.

Reference numeral list

100 illustration of particle clustering
102 map
104 clustered map

| | |
|---|---|
| 106 | cluster |
| 108 | cluster |
| 110 | cluster |
| 112 | obstacles |
| 200 | illustration of cluster parallel filtering according to various embodiments |
| 202 | map at clustering time |
| 204 | map after updating clusters with motion model |
| 300 | illustration of a scenario of ego-pose initialization with particle filtering according to various embodiments |
| 400 | illustration of monitoring of three generated clusters based on their effective sample size and entropy information after a clustering process according to various embodiments |
| 402 | solid line representing the maximum entropy of the first cluster |
| 404 | solid line representing the maximum entropy of the second cluster |
| 406 | solid line representing the maximum entropy of the third cluster |
| 408 | dashed line representing the entropy of the first cluster |
| 410 | dashed line representing the entropy of the second cluster |
| 412 | dashed line representing the entropy of the third cluster |
| 414 | solid line representing the effective sample size of the first cluster |
| 416 | solid line representing the effective sample size of the second cluster |
| 418 | solid line representing the effective sample size of the third cluster |
| 420 | dashed line representing the sample size of the first cluster |
| 422 | dashed line representing the sample size of the second cluster |
| 424 | dashed line representing the sample size of the third cluster |
| 500 | flow diagram illustrating a method for determining an initial ego-pose for initialization of self-localization according to various embodiments |
| 502 | step of providing a plurality of particles in a map |
| 504 | step of grouping the particles |
| 506 | step of performing particle filtering individually for each of the clusters |
| 508 | step of determining an initial ego-pose |

**Claims**

1. Computer implemented method for determining an initial ego-pose for initialization of self-localization, the method comprising the following steps carried out by computer hardware components:

   - providing (502) a plurality of particles in a map;
   - grouping (504) the particles in a plurality of clusters;
   - performing particle filtering (506) individually for each of the clusters; and
   - determining (508) an initial ego-pose based on the particle filtering.

2. The computer implemented method of claim 1, wherein the particle filtering (506) is performed individually for each of the clusters in parallel.

3. The computer implemented method of any one of claims 1 or 2, wherein the plurality of particles are provided based on a random distribution over the map.

4. The computer implemented method of at least one of claims 1 to 3, wherein the plurality of particles are provided based on an estimate of the ego-pose.

5. The computer implemented method of at least one of claims 1 to 4, wherein performing the particle filtering (506) comprises: sample distribution, prediction, updating, and re-sampling.

6. The computer implemented method of at least one of claims 1 to 5, wherein the particles are grouped into the plurality of clusters based on at least one of a numbers of particles in a potential cluster or a numbers of potential clusters.

7. The computer implemented method of at least one of claims 1 to 6, further comprising the following step carried out by the computer hardware components: exhausting a cluster if it is outside a region of interest.

8. The computer implemented method of at least one of claims 1 to 7, further comprising the following step carried out by the computer hardware components: exhausting a particle of a cluster if the particle is outside a region of interest.

9. The computer implemented method of at least one of claims 1 to 8, further comprising the following steps carried out by the computer hardware components: receiving electromagnetic radiation emitted from at least one emitter of a sensor system of a vehicle and reflected in a vicinity of the vehicle towards the sensor system.

10. The computer implemented method of claim 9, wherein the particle filtering (506) is performed based on the received electromagnetic radiation and based on the map.

11. The computer implemented method of at least one of claims 1 to 10, wherein the initial ego-position is determined based on at least one of a pre-determined number threshold for the number of clusters or a pre-determined size threshold for the respective spatial sizes of the clusters.

12. The computer implemented method of at least one of claims 1 to 11, wherein the initial ego-position is determined based on entropy based monitoring based on a binary grid.

13. Computer system, the computer system being configured to carry out the computer implemented method of at least one of claims 1 to 12.

14. A vehicle equipped with a sensor system adapted to receive electromagnetic radiation emitted from at least one emitter of a sensor system and reflected in a vicinity of the vehicle towards the sensor system, and a computer system of claim 13 for determining an initial ego-pose for initialization of self-localization of the vehicle.

15. Non-transitory computer readable medium comprising instructions for carrying out the computer implemented method of at least one of claims 1 to 12.

Fig. 1

Fig. 2

300

Fig. 3

400

Fig. 4

500

Provide a plurality of particles in a map — 502

Group the particles in a plurality of clusters, plurality of particles — 504

Perform particle filtering individually for each of the clusters — 506

Determine an initial ego-pose — 508

Fig. 5

Europäisches
Patentamt

European
Patent Office

Office européen
des brevets

# EUROPEAN SEARCH REPORT

Application Number

EP 19 21 3741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 109 579 849 A (ZHEJIANG DAHUA TECHNOLOGY CO) 5 April 2019 (2019-04-05)<br>* last three lines;<br>page 1 *<br>* page 2, lines 13, 14, 37, 38 *<br>* page 3, lines 1-8 *<br>* page 11, lines 11-28 *<br>* step 301, 302;<br>page 13 *<br>* step 304;<br>page 16, lines 14-20 *<br>* step 305;<br>page 17 *<br>* page 18, lines 1-8 *<br>* page 27, line 29 - page 28, line 3 *<br>* page 28, lines 27-30 *<br>----- | 1-8,<br>11-15<br>9,10 | INV.<br>G06T7/277<br>G01C21/20<br>G01C21/30<br>G01C21/16<br>G01S5/02<br><br>ADD.<br>G01S13/02<br>G01S13/88 |
| X<br><br><br>Y | WO 2018/018994 A1 (CHIGOO INTERACTIVE TECHNOLOGY CO LTD [CN])<br>1 February 2018 (2018-02-01)<br>* last paragraph;<br>page 5 *<br>* step S101;<br>page 8 *<br>* step S103;<br>page 9, lines 13-20 *<br>* step S202;<br>page 11 *<br>* step S205, last paragraph;<br>page 14 *<br>----- | 1-8,<br>11-15<br><br>9,10 | |
| Y | US 2019/271549 A1 (ZHANG RONGHUA [US] ET AL) 5 September 2019 (2019-09-05)<br>* paragraphs [0085] - [0111] *<br>----- | 9,10 | |

TECHNICAL FIELDS
SEARCHED      (IPC)

G01C
G01S
G06T

The present search report has been drawn up for all claims

| Place of search | Date of completion of the search | Examiner |
|---|---|---|
| Munich | 15 May 2020 | Naddeo, Giovanni |

## ANNEX TO THE EUROPEAN SEARCH REPORT
## ON EUROPEAN PATENT APPLICATION NO.

EP 19 21 3741

This annex lists the patent family members relating to the patent documents cited in  the above-mentioned European search report.
The members are as contained in the European Patent Office EDP file on
The European Patent Office is in no way liable for these particulars which are merely given for the purpose of information.

15-05-2020

| Patent document cited in search report | | Publication date | Patent family member(s) | | Publication date |
|---|---|---|---|---|---|
| CN 109579849 | A | 05-04-2019 | NONE | | |
| WO 2018018994 | A1 | 01-02-2018 | CN | 106289257 A | 04-01-2017 |
| | | | WO | 2018018994 A1 | 01-02-2018 |
| US 2019271549 | A1 | 05-09-2019 | US | 2019271549 A1 | 05-09-2019 |
| | | | WO | 2019169358 A1 | 06-09-2019 |

EPO FORM P0459

For more details about this annex : see Official Journal of the European Patent Office, No. 12/82